# EUROPEAN PATENT APPLICATION

(11) **EP 4 835 748 A1**
(43) Date of publication of application: **04.11.2026**
(21) Application number: 26173221.8
(22) Date of filing: 20.04.2026
(51) Int. Cl.: G06N 7/01, G06N 5/01, G06N 5/022

(54) **INFORMATION PROCESSING PROGRAM, INFORMATION PROCESSING METHOD, AND INFORMATION PROCESSING DEVICE**

(30) Priority: 28.04.2025 JP 2025074731
(71) Applicant: FUJITSU LIMITED, Kawasaki-shi, Kanagawa 211-8588 (JP)
(72) Inventor: SUZUKI, Hirofumi, Kawasaki-shi, Kanagawa, 211-8588 (JP); KANAMORI, Kentaro, Kawasaki-shi, Kanagawa, 211-8588 (JP); TAKAGI, Takuya, Kawasaki-shi, Kanagawa, 211-8588 (JP); SHIMIZU, Shohei, Hikone, Shiga, 522-8522 (JP); MAEDA, Takashi Nicholas, Hikone, Shiga, 522-8522 (JP)
(74) Representative: Hoffmann Eitle

(57) **Abstract**

An information processing device obtains first information related to causal relationships between variables estimated based on data. The information processing device refers to each of the first information and obtains second information capable of specifying for each variable pair, whether there is a causal path passing through an unobserved variable. The information processing device refers to third information obtained by integrating the first information and specifies a variable pair whose causal relationship is unobserved and a variable pair whose causal relationship is unidentifiable. The information processing device generates fourth information by setting any relationship that may be taken as a relationship between variables between the variables of each of the specified variable pairs in the third information. The information processing device specifies fourth information that is consistent with any of the second information among the fourth information.

## Description

### FIELD

The embodiments discussed herein are related to an information processing program, an information processing method, and an information processing device.

### BACKGROUND

Conventionally, there is a case where a causal relationship between variables is desired to be estimated (causal search) from multiple pieces of incomplete data in which unobserved variables are present in each piece of data. For example, there is a technique of assuming a linear causal model and estimating causal relationships of all variable pairs from multiple pieces of incomplete data.

In a related art, for example, a third variable is generated by reducing a dimension of a graphical representation of two-dimensional data defined by a first variable and a second variable, and a causal relationship between the first variable and the third variable and between the second variable and the third variable is determined. There are also techniques for sampling a temporal causal graph from a temporal graph distribution that specifies probabilities of directed causal edges between different variables of a feature vector at a current time step and from one variable at a previous time step to another variable at the current time step.

In addition, there is a technique of classifying multiple variables into two or more groups based on similarity of variables on a joint distribution, performing a causal search between determined representative variables for each group, and performing a causal search between variables included in each group. In addition, there is a technique of determining first and second variables having a direct causal relationship, based on a model representing a causal relationship between multiple variables obtained based on observation data of the multiple variables, and deleting the direct causal relationship between the first and second variables from the model in response to the first and second variables being independent of each other. For example, refer to U.S. Patent Application Publication No. 2020/0279417, U.S. Patent Application Publication No. 2024/0104338; International Publication No. WO 2024/201796, and Japanese Laid-Open Patent Publication No. 2021-061055.

### SUMMARY

It is an object in one aspect of the embodiments to at least solve the above problems in the conventional technologies.

According to an aspect of an embodiment, an information processing program for causing a computer to execute a process, the process including: obtaining, for each of a plurality of data representing values of a plurality of variables associated with each other, first information related to a causal relationship between variables included in the plurality of variables estimated based on the each of the plurality of data; referring to each of the obtained first information and obtaining second information capable of specifying whether a causal path passing through an unobserved variable exists for each variable pair among the plurality of variables; specifying a variable pair whose causal relationship is unobserved and a variable pair whose causal relationship is unidentifiable by referring to third information obtained by integration of the obtained first information; and specifying fourth information that does not contradict any of the obtained second information, the fourth information being specified from among a plurality of mutually different pieces of fourth information generated by setting, between the variables of each of the specified variable pairs in the third information, any relationship that may be taken as a relationship between the variables.

### BRIEF DESCRIPTION OF DRAWINGS

Fig. 1 is an explanatory diagram depicting an example of an information processing method according to an embodiment.
Fig. 2 is an explanatory diagram depicting UCP/UBP.
Fig. 3 is an explanatory diagram depicting an example of a system configuration of an information processing system 300.
Fig. 4 is a block diagram depicting an example of a hardware configuration of a causal searching device 301.
Fig. 5 is an explanatory diagram depicting a specific example of incomplete data.
Fig. 6 is an explanatory diagram depicting a specific example of an incomplete causal graph.
Fig. 7 is a block diagram depicting an example of a functional configuration of the causal searching device 301.
Fig. 8 is an explanatory diagram depicting an integration example of causal graphs.
Fig. 9 is an explanatory diagram depicting a generation example of multiple causal graph candidates.
Fig. 10 is an explanatory diagram depicting a contradiction determination example of a causal graph candidate.
Fig. 11 is an explanatory diagram depicting an example of pruning.
Fig. 12 is an explanatory diagram depicting a specific example of a causal search result.
Fig. 13 is an explanatory diagram depicting an output example of CAM-UV.
Fig. 14 is an explanatory diagram depicting a causal search example.
Fig. 15 is an explanatory diagram depicting a causal search example.
Fig. 16 is a flowchart depicting an example of a procedure of a causal search process of the causal searching device 301.

### DESCRIPTION OF EMBODIMENTS

First, problems associated with the conventional techniques are discussed. In conventional techniques, it is difficult to perform a causal search using multiple incomplete data. For example, data (incomplete data) existing in the real world often has a non-linear relationship, and it is difficult to correctly estimate a causal relationship between variables in a linear causal model.

Embodiments of an information processing program, an information processing method, and an information processing device according to the present disclosure will be explained below in detail with reference to the accompanying drawings.

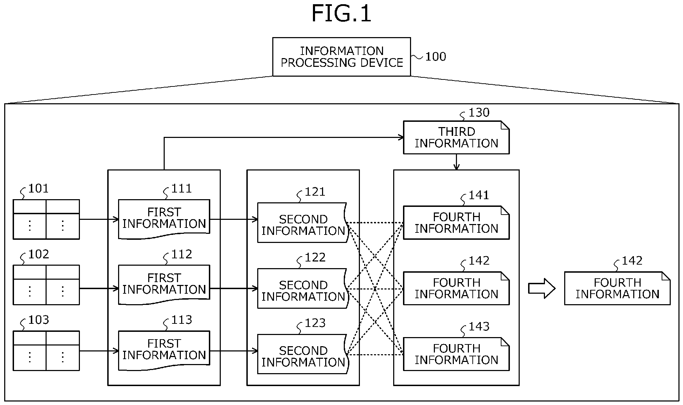

Fig. 1 is an explanatory diagram depicting an example of an information processing method according to an embodiment. In Fig. 1, an information processing device 100 is a computer that estimates a causal relationship between variables based on multiple pieces of data. Each piece of data of the multiple pieces of data is information representing values of multiple variables associated with each other. The variables are of a numeric type.

Each data is, for example, table data in which each row is a record and each column corresponds to each of multiple variables related to the record. A combination of multiple variables indicated in each piece of data is different from that of other pieces of data, for example. However, the multiple pieces of data may include data in which a combination of multiple variables is the same as that of other data.

A causal relationship is a relationship between a cause and an effect resulting from the cause. For example, when the value of a variable a affects the value of a variable b, it is said that "there is a causal relationship from the variable a to the variable b". Each data is so-called incomplete data. Incomplete data is data in which unobserved variables exist. An unobserved variable in certain data is a variable that is not indicated in the data but is indicated in other data.

Real world data is often incomplete data. For example, in medical records of hospitals, the type of information included is often different depending on the hospital. Therefore, it may be said that the medical record of each hospital is incomplete data in which unobserved variables (unobserved variables) are present in each.

For example, it is assumed that a medical record having "alcohol consumption/day" and "smoking amount/day" as variables is recorded in hospital A. In addition, it is assumed that, in hospital B, a medical record having "alcohol consumption/day" and "lung cancer risk" as variables is recorded. In this case, in the medical record of hospital A, the "lung cancer risk" is an unobserved variable. In the medical record of hospital B, "smoking amount/day" is an unobserved variable.

There is a demand for estimating a causal relationship between variables by utilizing such pieces of incomplete data. Here, assuming a linear causal model (linear relationship), for example, it is conceivable to estimate the causal relationship of all variable pairs from multiple incomplete data using the following equation (1). Here, xᵢ is an i-th variable. Pᵢ is a set of variables having causality (xⱼ→xᵢ) in xᵢ. bⱼᵢ is a scalar value representing a causal relationship from xⱼ to xᵢ. eᵢ is noise included in xᵢ.${x}_{i} = {\sum }_{j ∈ {P}_{i}} {b}_{ji} {x}_{j} + {e}_{i}$ (1)

The linear causal model is the simplest causal model. However, there are many real world data having a non-linear relationship (y=x₂ or the like). A non-linear relationship cannot be correctly estimated by a linear causal model. For this reason, it is preferable to introduce a nonlinear causal model into real world data.

Examples of the nonlinear causal model include a Causal Additive Model (CAM). The nonlinear causal model is expressed by, for example, the following equation (2). Where, xᵢ is an i-th variable. Pᵢ is a set of variables having causality (xⱼ→xᵢ) in xᵢ. fⱼᵢ is a nonlinear function representing a causal relationship from xⱼ to xᵢ. eᵢ is noise included in xᵢ.${x}_{i} = {\sum }_{j ∈ {P}_{i}} {f}_{ji} \left({x}_{j}\right) + {e}_{i}$ (2)

In addition, CAM with Unobserved Variables (CAM-UV) is a method (algorithm) for estimating a causal relationship for data having a nonlinear relationship, assuming a CAM (nonlinear causal model). CAM-UV may process incomplete data and is a method of estimating a causal relationship as much as possible even when there is an unobserved variable.

In addition, CAM-UV may determine the existence of an Unobserved Causal Path (UCP) and an Unobserved Backdoor (UBP) from data without information concerning unobserved variables. The UCP is a path (causal path) in which an unobserved variable exists in a causal flow (causal relationship) from a certain variable to another variable.

The UBP is a path in which there is a variable that is a common ancestor of two variables, and an unobserved variable exists in a path from the variable to each of the two variables. Although CAM-UV cannot know the specific structure of UCP/UBP, it may determine the presence of UCP/UBP.

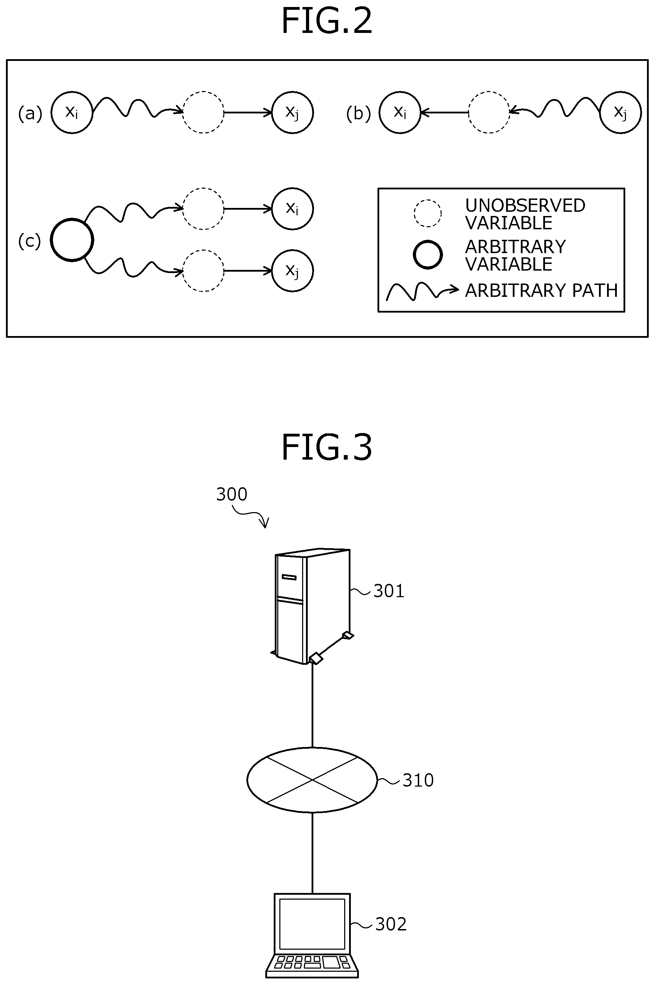

Here, the UCP and the UBP will be described with reference to Fig. 2.

Fig. 2 is an explanatory diagram depicting UCP/UBP. In Fig. 2, (a) and (b) depict examples of the UCP. (c) represents an example of a UBP. In Fig. 2, dotted circles represent unobserved variables. Thick circles represent arbitrary variables. Wavy arrows indicate optional paths.

(a) is a path (UCP) in which an unobserved variable exists in the causal relationship from the variable xᵢ to the variable xⱼ. (b) is a path (UCP) in which an unobserved variable exists in the causal relationship from the variable xⱼ to the variable xᵢ. (c) is a path (UBP) in which there is an arbitrary variable that becomes a common ancestor with respect to the variables xᵢ and xⱼ, and an unobserved variable (immediately before each of the variables xᵢ and xⱼ) exists in both paths from the variable to each of the variables xᵢ and xⱼ. Note that the UBP also includes two paths directly connected from an unobserved variable (common ancestor) to the variables xᵢ and xⱼ by edges.

In CAM-UV, with consideration of two types of causal paths (UCP/UBP) derived from unobserved variables for a pair of variables xᵢ and xⱼ, when any one of UCP/UBP exists, it is guaranteed that the causal relationship between xᵢ and xⱼ cannot be identified. On the other hand, when neither UCP and UBP exist, it is guaranteed that the causal relationship between xᵢ and xⱼ is identifiable (the presence or absence and direction of the causal relationship are determined).

In the present embodiment, an information processing method for easing the difficulty of a causal search using multiple pieces of incomplete data by introducing a nonlinear causal model (for example, CAM) and using an algorithm (for example, CAM-UV) capable of processing incomplete data will be described.

Here, an example of a process by the information processing device 100 will be described. Here, "data 101 to 103" will be described as an example of the multiple pieces of incomplete data. Each of the data 101 to 103 is table data representing and associating values of multiple variables with each other.
(1) The information processing device 100 obtains first information 111 to 113 for each of the data 101 to 103. The first information 111 to 113 is information estimated based on the data 101 to 103 and related to a causal relationship between variables included among the multiple variables. The information concerning the causal relationship between the variables corresponds to an estimation result of the causal relationship between the variables estimated based on each of the data 101 to 103.

The first information 111 to 113 is represented by, for example, a causal graph. The causal graph is information representing a causal relationship between variables in a graph form. The causal graph includes, for example, nodes representing variables and edges coupling the nodes. The edges includes a directed edge and an undirected edge. An edge (directed edge) is an edge coupling variables having a causal relationship. The direction of the causal relationship is represented by an arrow. An edge (undirected edge) is an edge connecting variables whose causal relationship is unidentifiable. There is no edge between variables having no causal relationship.

For example, the first information 111 corresponds to an estimation result of a causal relationship between variables included in multiple variables in the data 101, and is estimated based on the data 101. The first information 111 indicates, for variables included in multiple variables in the data 101, any one of a causal relationship between the variables, no causal relationship between the variables, and a causal relationship between the variables is unidentifiable.

Specifically, for example, the information processing device 100 obtains the first information 111 to 113 by applying CAM-UV to the data 101 to 103. Each of the first information 111 to 113 is, for example, a causal graph (an incomplete causal graph derived from an unobserved variable) that is an output of CAM-UV.

(2) The information processing device 100 refers to each of the obtained pieces of first information 111 to 113 and obtains pieces of second information 121 to 123 capable of specifying whether there is a causal path passing through an unobserved variable for each variable pair of the multiple variables. The multiple variables are variables in the first information 111 to 113 (the data 101 to 103). The causal path passing through the unobserved variable is, for example, a UCP or a UBP.

For example, it is assumed that there is a variable pair of a variable a and a variable b in the first information 111 (data 101). In this case, the information processing device 100 refers to the first information 111 to determine whether a UCP/UBP exists for the pair of variables a and b. In CAM-UV, if any one of UCP/UBP (see Fig. 2) exists for a certain variable pair, it is determined that the causal relationship between the variables is unidentifiable.

Therefore, the information processing device 100 refers to the first information 111 and determines that the UCP/UBP is present when the causal relationship between the variables a and b indicates that the causal relationship cannot be identified. On the other hand, the information processing device 100 refers to the first information 111 and determines that there is no UCP/UBP when it is indicated that there is a causal relationship between the variables a and b or when it is indicated that there is no causal relationship between the variables a and b.

As described, the information processing device 100 may obtain the second information 121 by determining the presence or absence of UCP/UBP for each variable pair in the first information 111 (data 101). Similarly, the information processing device 100 may obtain the second information 122 and 123 by determining the presence or absence of UCP/UBP for each variable pair in the first information 112 and 113 (the data 102 and 103).

(3) The information processing device 100 refers to third information 130 obtained by integrating the obtained first information 111 to 113, and specifies a variable pair whose causal relationship is unobserved and a variable pair whose causal relationship is unidentifiable. To integrate the pieces of first information 111 to 113 means to superimpose the pieces of first information 111 to 113 into one piece.

Specifically, for example, the information processing device 100 specifies a relationship between variables for all variable pairs of the multiple variables included in the first information 111 to 113. Then, the information processing device 100 generates, as the specified relationship, the third information 130 representing the relationship of each of the variable pairs when the first information 111 to 113 is superimposed.

The third information 130 is, for example, a causal graph including a variable pair in which a relationship between variables is not determined. Examples of the relationship of the variable pair in the third information 130 include a "confirmed relationship", an "unidentifiable relationship", and an "unobserved relationship". The "confirmed relationship" is "there is a causal relationship (including the direction of the causal relationship)" or "there is no causal relationship".

For example, if there is a causal relationship in any of the first information 111 to 113 for a certain variable pair, the information processing device 100 determines that the relationship between the variables is "there is a causal relationship (including the direction of the causal relationship)".

In addition, when there is no causal relationship in any of the first information 111 to 113 for a certain variable pair, the information processing device 100 sets the relationship between the variables as "there is no causal relationship". However, this is only when the causal relationship does not exist in any of the other pieces of first information for the variable pair.

For a certain variable pair, there may be a case in which a causal relationship exists in one of the first information 111 to 113 and no causal relationship exists in the others. In this case, the information processing device 100 may regard the relationship between the variables as "having a causal relationship (including the direction of the causal relationship)" or "not having a causal relationship".

In addition, for a certain variable pair, when the causal relationship is unidentifiable in any of the first information 111 to 113, the information processing device 100 sets the relationship between the variables as an "unidentifiable relationship". However, this is only when, for the variable pair, the presence or absence of a causal relationship is not indicated in any of the other pieces of first information.

In addition, the information processing device 100 assumes the relationship between a variable pair to be an "unobserved relationship" when the variable pair is not indicated in any of the first information 111 to 113.

The information processing device 100 refers to the generated third information 130 and specifies a variable pair in which a relationship between variables is an "unobserved relationship" as a variable pair in which a causal relationship is unobserved. In addition, the information processing device 100 refers to the generated third information 130 and specifies a variable pair in which a relationship between variables is an "unidentifiable relationship" as a variable pair in which a causal relationship is unidentifiable.

(4) The information processing device 100 generates multiple pieces of fourth information different from each other by setting, between the variables of each of the specified variable pairs in the third information 130, any relationship that may be taken as a relationship between the variables. A relationship that may be taken as a relationship between variables is, for example, any one of a causal relationship from one variable to the other variable, a causal relationship from the other variable to the one variable, and no causal relationship.

Specifically, for example, the information processing device 100 generates multiple pieces of fourth information by determining the relationship of the variable pair of the "unobserved relationship" or the "unidentifiable relationship" in the third information 130. Here, the multiple pieces of fourth information are referred to as "fourth information 141 to 143". Each of the fourth information 141 to 143 is represented by, for example, a causal graph. The fourth information 141 to 143 corresponds to, for example, candidates for a causal graph representing a true causal relationship.

(5) The information processing device 100 specifies fourth information that is not inconsistent with any of the obtained second information 121 to 123 among the generated fourth information 141 to 143. Then, the information processing device 100 outputs the specified fourth information.

For example, it is assumed that it is specified from the second information 121 that a UCP/UBP exists for a variable pair of a variable a and a variable b. Further, it is assumed that there is no UCP/UBP for the variable pair a and b in the fourth information 141. In this case, the information processing device 100 determines that the fourth information 141 is inconsistent with the second information 121.

For example, it is assumed that it is specified from the second information 122 that there is no UCP/UBP for the variable pair of the variable b and the variable c. Further, it is assumed that there is a UCP/UBP for the variable pair b and c in the fourth information 143. In this case, the information processing device 100 determines that the fourth information 143 is inconsistent with the second information 122.

Here, it is assumed that only the fourth information 142 among the fourth information 141 to 143 does not contradict any of the second information 121 to 123. In this case, the information processing device 100 specifies the fourth information 142 that does not contradict any of the second information 121 to 123 among the generated fourth information 141 to 143, and outputs the specified fourth information 142. The fourth information 142 corresponds to, for example, a causal graph that does not contradict a result of CAM-UV among candidates as a causal graph representing a true causal relationship.

As described above, according to the information processing device 100, with respect to a causal search based on multiple incomplete data (for example, the data 101 to 103), a non-linear causal model (for example, CAM) is introduced, and an algorithm (for example, CAM-UV) capable of processing incomplete data is used, so that it is possible to alleviate the difficulty of the causal search.

For example, the information processing device 100 may integrate incomplete causal relationships (first information 111 to 113) derived from unobserved variables obtained from the data 101 to 103 and output the fourth information 142 that is consistent with the result of CAM-UV. As a result, the information processing device 100 may perform causal integration on the nonlinear causal model and may estimate a relationship between unobserved variables or a relationship between variables that is difficult to identify and is difficult to search only with the data 101 to 103.

Next, an example of a system configuration of an information processing system 300 including the information processing device 100 depicted in Fig. 1 will be described. Here, a case where the information processing device 100 depicted in Fig. 1 is applied to a causal searching device 301 in the information processing system 200 will be described as an example.

Fig. 3 is an explanatory diagram depicting an example of a system configuration of the information processing system 300. In Fig. 3, the information processing system 300 includes a causal searching device 301 and a client device 302. In the information processing system 300, the causal searching device 301 and the client device 302 are connected via a wired or wireless network 310. The network 310 is, for example, the Internet, a local area network (LAN), a wide area network (WAN), or the like.

Here, the causal searching device 301 estimates a causal relationship between variables from multiple incomplete data. The causal searching device 301 is, for example, a server. The client device 302 is a computer used by a user of the information processing system 300. The client device 302 is, for example, a personal computer (PC), a tablet PC, or the like.

Here, the causal searching device 301 and the client device 302 are separately provided, but the present disclosure is not limited thereto. For example, the causal searching device 301 may be realized by the client device 302. The information processing system 300 may include multiple client devices 302.

Next, an example of a hardware configuration of the causal searching device 301 will be described.

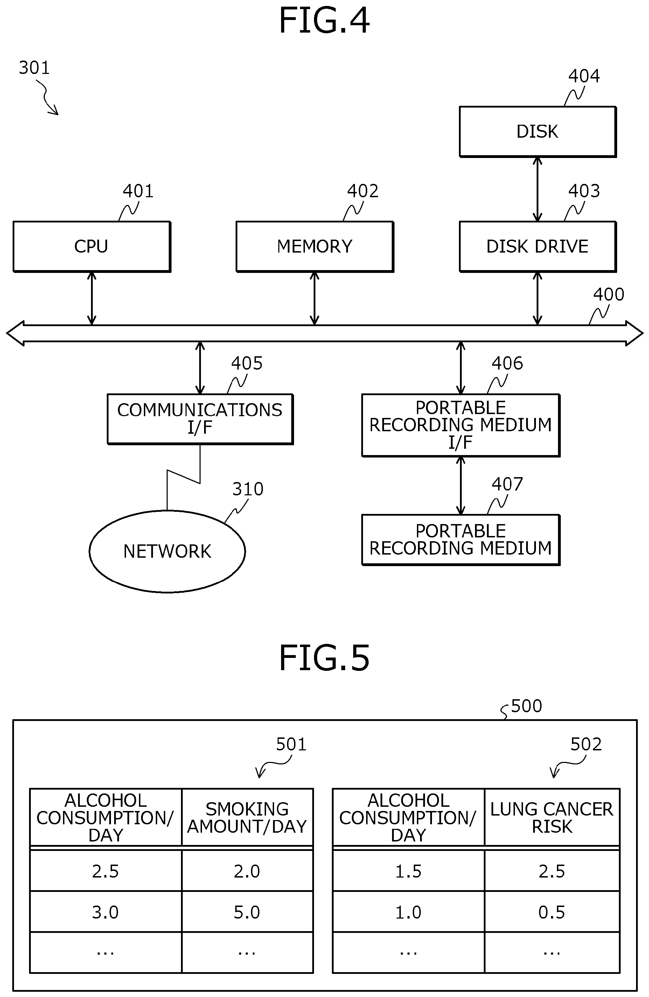

Fig. 4 is a block diagram depicting an example of a hardware configuration of the causal searching device 301. In Fig. 4, the causal searching device 301 includes a central processing unit (CPU) 401, a memory 402, a disk drive 403, a disk 404, a communication interface (I/F) 405, a portable recording medium I/F 406, and a portable recording medium 407. The components are connected to each other via a bus 400.

Here, the CPU 401 governs overall control of the causal searching device 301. The CPU 401 may include multiple cores. The memory 402 includes, for example, a read only memory (ROM) and a random access memory (RAM). A program stored in the memory 402 is loaded onto the CPU 401 to cause the CPU 401 to execute an encoded process.

The disk drive 403 controls the reading and writing of data with respect to the disk 404, under the control of the CPU 401. The disk 404 stores therein data written thereto under the control of the disk drive 403. The disk 404 is, for example, a magnetic disk, an optical disk, or the like.

The communications I/F 405 is connected to the network 310 via a communication line, and is connected to an external computer (for example, the client device 302 depicted in Fig. 3) via the network 310. The communications I/F 405 serves as an interface between the network 310 and the inside of the device, and controls the input and the output of data with respect to an external computer. The communications I/F 405 is, for example, a modem or a LAN adapter.

The portable recording medium I/F 406 controls the reading and the writing of data with respect to the portable recording medium 407, under the control of the CPU 401. The portable recording medium 407 stores therein data written thereto, under the control of the portable recording medium I/F 406. The portable recording medium 407 is, for example, a compact disc (CD)-ROM, a digital versatile disk (DVD), a universal serial bus (USB) memory, or the like.

The causal searching device 301 may include, for example, a graphics processing unit (GPU), a GPU memory, an input device, a display, and the like in addition to the above-described components. The causal searching device 301 may omit, for example, the portable recording medium I/F 406 and the portable recording medium 407 among the above-described components. The client device 302 depicted in Fig. 2 may also be implemented by a hardware configuration similar to that of the causal searching device 301. However, the client device 302 includes, for example, an input device, a display, and the like in addition to the above-described components.

Next, a specific example of incomplete data will be described. Incomplete data is data in which unobserved variables exist and corresponds to, for example, the data 101 to 103 depicted in Fig. 1.

Fig. 5 is an explanatory diagram depicting a specific example of incomplete data. In Fig. 5, a data group 500 is an example of multiple incomplete data, and includes data 501 and data 502. The data 501 is table data in which each row is a record and columns correspond to variables "alcohol consumption/day" and "smoking amount/day". Data 502 is table data in which each row is a record and columns correspond to variables "alcohol consumption/day" and "lung cancer risk".

Next, a specific example of an incomplete causal graph will be described. An incomplete causal graph is an incomplete causal graph derived from an unobserved variable obtained from incomplete data, and corresponds to, for example, the first information 111 to 113 depicted in Fig. 1.

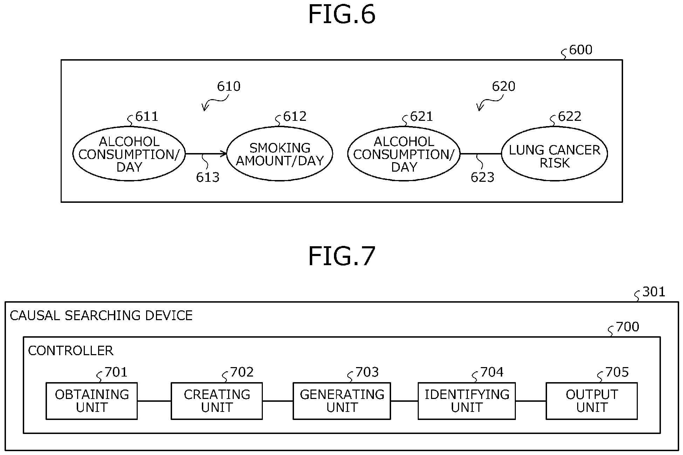

Fig. 6 is an explanatory diagram depicting a specific example of an incomplete causal graph. In Fig. 6, a causal graph group 600 is an example of multiple incomplete causal graphs, and includes a causal graph 610 and a causal graph 620. The causal graph 610 is an incomplete causal graph derived from an unobserved variable obtained by applying CAM-UV to the data 501 depicted in Fig. 5. The causal graph 620 is an incomplete causal graph derived from an unobserved variable obtained by applying CAM-UV to the data 502 depicted in Fig. 5.

The causal graph 610 includes nodes 611 and 612 and an edge 613 connecting the nodes 611 and 612. The node 611 represents a variable "drinking amount/day". The node 612 represents the variable "smoking amount/day". The edge 613 is an edge (directed edge) representing a causal relationship from the variable "alcohol consumption/day" to the variable "smoking amount/day".

The causal graph 620 includes nodes 621 and 622 and an edge 623 connecting the nodes 621 and 622. The node 621 represents a variable "drinking amount/day". Node 622 represents the variable "lung cancer risk". The edge 623 is an edge (undirected edge) representing that the causal relationship between the variable "alcohol consumption/day" and the variable "lung cancer risk" is unidentifiable.

Next, an example of a functional configuration of the causal searching device 301 will be described.

Fig. 7 is a block diagram depicting an example of a functional configuration of the causal searching device 301. In Fig. 7, the causal searching device 301 includes an obtaining unit 701, a creating unit 702, a generating unit 703, an identifying unit 704, and an output unit 705. The obtaining unit 701 to the output unit 705 are functions serving as the control unit 700. Specifically, for example, the functions are realized by causing the CPU 401 to execute a program stored in a storage device such as the memory 402, the disk 404, or the portable recording medium 407 depicted in Fig. 4 or by the communications I/F 405. The processing results of the functional units are stored to, for example, a storage device such as the memory 402 or the disk 404.

The obtaining unit 701 obtains data representing values of multiple variables associated with each other. Each piece of data is, for example, incomplete data in which an unobserved variable is present. Each data is, for example, table data in which each row is a record and each column is associated with multiple variables. The variables are of numerical type.

Specifically, for example, the obtaining unit 701 may obtain the data group 500 (see Fig. 5) by receiving the data group 500 from the client device 302 depicted in Fig. 3. In addition, the obtaining unit 701 may obtain the data group 500 (see Fig. 5) by an operation input of a user using an input device (not depicted) of a device of the user.

The creating unit 702 creates, based on each piece of obtained data, first information related to a causal relationship between variables included among multiple variables in each piece of data. The first information corresponds to, for example, an incomplete causal graph derived from an unobserved variable. Specifically, for example, the creating unit 702 applies CAM-UV to each of the data 501 and 502 of the obtained data group 500 to estimate a causal relationship between variables, thereby creating causal graphs 610 and 620 (first information) as depicted in Fig. 6. The causal graphs 610 and 620 (first information) correspond to the output of the CAM-UV.

The first information may be created by another computer (for example, the client device 302) different from the causal searching device 301. In this case, the obtaining unit 701 may obtain the first information related to the causal relationship between the variables estimated based on each piece of data from another computer.

Further, the creating unit 702 refers to each piece of the first information and obtains second information capable of specifying whether there is a causal path passing through an unobserved variable for each variable pair among the multiple variables in the first information (each piece of data). Here, the causal path passing through the unobserved variable is, for example, the UCP or the UBP (see Fig. 2).

For example, in the causal graph 610, there is a causal relationship from the variable "alcohol consumption/day" identified by CAM-UV to the variable "smoking amount/day". Therefore, the creating unit 702 refers to the causal graph 610 and obtains second information that may specify that neither UCP nor UBP is present for the variable pair "alcohol consumption/day" and "smoking amount/day".

In the causal graph 620, the causal relationship between the variable "alcohol consumption/day" and the variable "lung cancer risk" cannot be identified by CAM-UV. Therefore, the creating unit 702 refers to the causal graph 620 and obtains second information capable of specifying the presence of UCP or UBP for the variable pair "alcohol consumption/day" and "lung cancer risk".

The generating unit 703 generates third information obtained by integrating multiple pieces of first information. Specifically, for example, the generating unit 703 specifies a relationship between variables for all variable pairs among the multiple variables included in the causal graphs 610 and 620 (first information). Then, the generating unit 703 generates, as the specified relationship, a causal graph (third information) representing the relationship of each variable pair when the causal graphs 610 and 620 are superimposed.

Examples of the relationship of the variable pair in the causal graph (third information) include a "confirmed relationship", an "unidentifiable relationship", and an "unobserved relationship". The "confirmed relationship" is "there is a causal relationship (including the direction of the causal relationship)" or "there is no causal relationship".

Taking the causal graphs 610 and 620 (first information) as an example, the multiple variables are a variable "alcohol consumption/day", a variable "smoking amount/day", and a variable "lung cancer risk". In this case, the generating unit 703 specifies the relationship between the variables for all the variable pairs among the variable "alcohol consumption/day", the variable "smoking amount/day", and the variable "lung cancer risk".

For example, for the variable pair "alcohol consumption/day" and "smoking amount/day", there is a causal relationship from the variable "alcohol consumption/day" to the variable "smoking amount/day" in the causal graph 610. Therefore, the generating unit 703 identifies the relationship between the pair of variables "alcohol consumption/day" and "smoking amount/day" as "there is a causal relationship from the variable "alcohol consumption/day" to the variable "smoking amount/day"".

For the variable pair "alcohol consumption/day" and "lung cancer risk", the causal relationship between the variable "alcohol consumption/day" and the variable "lung cancer risk" cannot be identified in the causal graph 620. Therefore, the generating unit 703 specifies the relationship of the variable pair "alcohol consumption/day" and "lung cancer risk" as an "unidentifiable relationship".

The variable pair "smoking amount/day" and "lung cancer risk" is not depicted in any of the causal graphs 610 and 620. Therefore, the generating unit 703 specifies the relationship of the variable pair "smoking amount/day" and "lung cancer risk" as an "unobserved relationship".

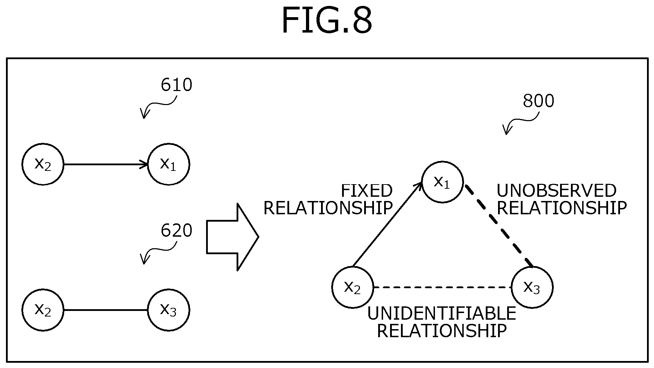

An integration example of the causal graph (first information) will be described later with reference to Fig. 8.

Further, the generating unit 703 refers to the generated third information to specify a variable pair whose causal relationship is unobserved and a variable pair whose causal relationship is unidentifiable. Then, the generating unit 703 generates multiple pieces of fourth information different from each other by setting, between the variables of each of the identified variable pairs in the third information, any relationship that may be taken as a relationship between the variables. The fourth information corresponds to, for example, a candidate for a causal graph representing a true causal relationship. In the following description, the fourth information may be referred to as a "causal graph candidate".

Specifically, for example, the generating unit 703 sets any one of a causal relationship from one variable to the other variable, a causal relationship from the other variable to the one variable, and no causal relationship between the variables of the identified variable pair in the causal graph (third information). Accordingly, the generating unit 703 generates multiple causal graph candidates (fourth information) different from each other. At this time, for example, the generating unit 703 assumes a full search (a combination of all relationships that may be set) for a variable pair of an "unobserved relationship" and an "unidentifiable relationship", and generates multiple causal graph candidates as follows.

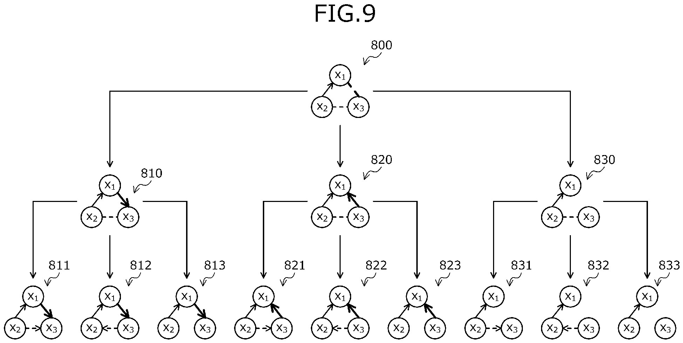

An example of generating multiple causal graph candidates (fourth information) will be described later with reference to Fig. 9.

The identifying unit 704 identifies fourth information that is not inconsistent with any of the obtained second information among the multiple pieces of generated fourth information. Specifically, for example, the identifying unit 704 excludes, from the multiple causal graph candidates (fourth information), a causal graph candidate that does not match the presence or absence of a UCP/UBP for the variable pair identified from the second information. Then, the identifying unit 704 identifies the remaining causal graph candidate as a causal graph candidate that does not contradict any of the second information.

In addition, a directed acyclic graph (DAG) is effective for expressing a causal relationship (no reversal of causality occurs). Therefore, the identifying unit 704 may identify the fourth information that is not inconsistent with any of the obtained second information and is a DAG among the multiple generated fourth information.

Specifically, for example, first, the identifying unit 704 excludes a causal graph candidate that is not a DAG from the multiple generated causal graph candidates (fourth information). Then, the identifying unit 704 may identify a causal graph candidate that does not contradict any piece of the second information from the remaining causal graph candidates after excluding causal graph candidates that are not DAGs.

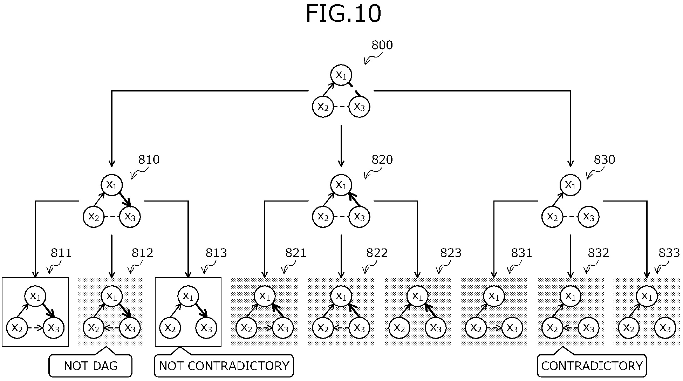

A contradiction determination example of the causal graph candidate (fourth information) will be described later with reference to Fig. 10.

The output unit 705 outputs the identified fourth information. Examples of the output format of the output unit 705 include storage to a storage device such as the memory 402 or the disk 404, transmission to another computer (for example, the client device 302) by the communications I/F 405, display on a display (not depicted), and print output to a printer (not depicted).

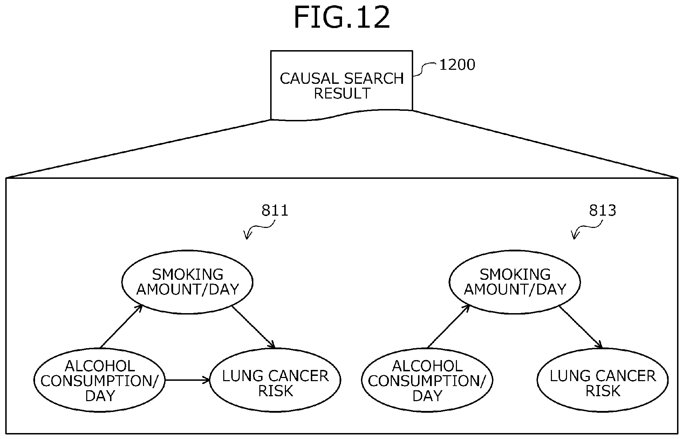

Specifically, for example, the output unit 705 outputs a causal search result including the identified causal graph candidate (fourth information). The causal graph candidate included in the causal search result corresponds to a causal graph candidate representing a true causal relationship. A specific example of the causal search result will be described later with reference to Fig. 12.

In addition, when generating the multiple pieces of fourth information, the generating unit 703 may determine whether, in a case where a first relationship is set between variables of a first variable pair among the identified variable pairs in the third information, any relationship set between variables of another variable pair other than the first variable pair contradicts any piece of the obtained second information.

The first relationship is any one of a causal relationship from one variable to the other variable, a causal relationship from the other variable to the one variable, and no causal relationship. Then, when it is determined that the fourth information is inconsistent with any of the second information, the generating unit 703 may exclude the fourth information in which the first relationship is set to the first variable pair in the third information from the generation target. On the other hand, when it is determined that there is no contradiction with any of the second information, the generating unit 703 generates fourth information in which the first relationship is set in the first variable pair in the third information.

As a result, when the relationship of a certain variable pair is determined and thereafter, no matter what relationship is set to another variable pair, the generating unit 703 does not match the second information, the generating unit 703 may abort (prune) the search in the middle and reduce the processing load on the causal search.

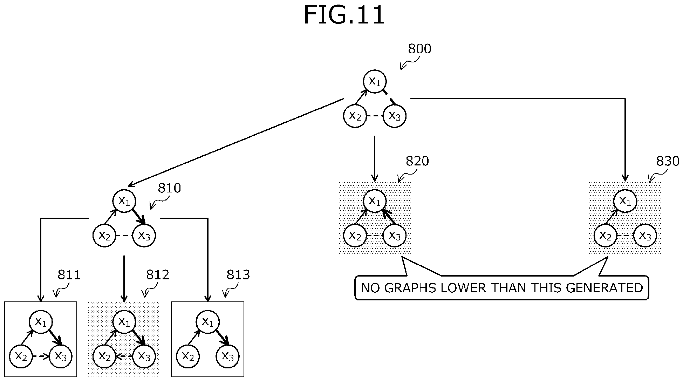

An example of pruning during a search will be described later with reference to Fig. 11. The first variable pair may be multiple variable pairs. Specifically, for example, when any relationship is set between variables of multiple variable pairs among the identified variable pairs in the third information, the generating unit 703 may determine whether any relationship set between variables of the remaining variable pairs contradicts any piece of the second information.

The functional units (the obtaining unit 701 to the output unit 705) of the causal searching device 301 described above may be realized by multiple computers (for example, the causal searching device 301 and the client device 302) in the information processing system 300. In this case, exchange between the functional units of the different computers is performed by, for example, transmission and reception between the functional units via the network 310.

Next, an integration example in a case where multiple causal graphs (first information) are integrated to generate a causal graph (third information) will be described with reference to Fig. 8. Here, the causal graphs 610 and 620 depicted in Fig. 6 will be described as examples of causal graphs (first information) to be integrated. In the following description, the variable "smoking amount/day" may be referred to as a variable x₁, the variable "alcohol consumption amount/day" may be referred to as a variable x₂, and the variable "lung cancer risk" may be referred to as a variable x₃.

Fig. 8 is an explanatory diagram depicting an integration example of causal graphs. In Fig. 8, first, the generating unit 703 specifies a relationship between variables for all variable pairs of variables x₁, x₂, and x₃ included in the causal graphs 610 and 620. Specifically, for example, the generating unit 703 refers to the causal graph 610 and specifies that the relationship between the pair of variables x₁ and x₂ is "there is a causal relationship from the variable x₂ to the variable x₁".

Further, the generating unit 703 specifies the relationship between the pair of variables x₂ and x₃ as an "unidentifiable relationship" with reference to the causal graph 620. Further, the generating unit 703 refers to the causal graphs 610 and 620 and specifies the relationship between the pair of variables x₁ and x₃ as an "unobserved relationship". Then, the generating unit 703 generates a causal graph 800 (third information) representing the relationship of each variable pair when the causal graphs 610 and 620 are superimposed as the specified relationship.

In the causal graph 800, the relationship between the pair of variables x₁ and x₂ is a "fixed relationship (causal relationship from the variable x₂ to the variable x₁)" (solid arrow). The relationship between the pair of variables x₂ and x₃ is an "unidentifiable relationship" (dotted line). The relationship between the pair of variables x₁ and x₃ is an "unobserved relationship" (thick broken line).

As described, the generating unit 703 may integrate the causal graphs 610 and 620 into one causal graph 800 by determining a relationship for a variable pair for which a causal relationship has been found from any one of the CAM-UV results and setting the other variable pairs as an "unidentifiable relationship" or an "unobserved relationship".

Next, a generation example of multiple causal graph candidates (fourth information) will be described with reference to Fig. 9. Here, a case will be described in which multiple causal graph candidates are generated on the assumption of a full search (a combination of all relationships that may be set) for a variable pair of an "unobserved relationship" and an "unidentifiable relationship".

Fig. 9 is an explanatory diagram depicting a generation example of multiple causal graph candidates. In Fig. 9, a causal graph 800 (third information) is depicted. The generating unit 703 refers to the causal graph 800 to specify the variable pair x₁ and x₃ whose causal relationship is unobserved and the variable pair x₂ and x₃ whose causal relationship is unidentifiable.

Then, the generating unit 703 generates a causal graph candidate (fourth information) by setting, between the variables of each of the specified variable pairs in the causal graph 800, any relationship that may be taken as a relationship between the variables. A relationship that may be taken as a relationship between variables is any one of "a causal relationship from one variable to the other variable","a causal relationship from the other variable to one variable", and "no causal relationship".

Specifically, for example, the generating unit 703 generates the causal graph 810 by setting a "causal relationship from the variable x₁ to the variable x₃" between the variables of the variable pair x₁ and x₃ in the causal graph 800. However, the causal graph 810 is in a state in which the relationship between the pair of variables x₂ and x₃ cannot be identified.

Next, the generating unit 703 generates a causal graph 811 by setting a "causal relationship from the variable x₂ to the variable x₃" between the variables of the variable pair x₂ and x₃ in the causal graph 810. In addition, the generating unit 703 generates the causal graph 812 by setting a "causal relationship from the variable x₃ to the variable x₂" between the variables of the variable pair x₂ and x₃ in the causal graph 810. Further, the generating unit 703 generates a causal graph 813 by setting "no causal relationship" between the variables of the variable pair x₂ and x₃ in the causal graph 810.

Similarly, the generating unit 703 generates the causal graph 820 by setting a "causal relationship from the variable x₃ to the variable x₁" between the variables of the variable pair x₁ and x₃ in the causal graph 800. However, the causal graph 820 is in a state in which the relationship between the pair of variables x₂ and x₃ cannot be identified.

Next, the generating unit 703 generates a causal graph 821 by setting a "causal relationship from the variable x₂ to the variable x₃" between the variables of the variable pair x₂ and x₃ in the causal graph 820. The generating unit 703 generates a causal graph 822 by setting a "causal relationship from the variable x₃ to the variable x₂" between the variables of the variable pair x₂ and x₃ in the causal graph 820. The generating unit 703 generates a causal graph 823 by setting "no causal relationship" between the variables of the variable pair x₂ and x₃ in the causal graph 820.

Similarly, the generating unit 703 generates a causal graph 830 by setting "no causal relationship" between the variables of the variable pair x₁ and x₃ in the causal graph 800. However, the causal graph 830 is in a state in which the relationship between the pair of variables x₂ and x₃ cannot be identified.

Next, the generating unit 703 generates a causal graph 831 by setting a "causal relationship from the variable x₂ to the variable x₃" between the variables of the variable pair x₂ and x₃ in the causal graph 830. The generating unit 703 generates a causal graph 832 by setting a "causal relationship from the variable x₃ to the variable x₂" between the variables of the variable pair x₂ and x₃ in the causal graph 830. The generating unit 703 generates a causal graph 833 by setting "no causal relationship" between the variables of the variable pair x₂ and x₃ in the causal graph 830.

As a result, the generating unit 703 may generate different causal graphs 811 to 813, 821 to 823, and 831 to 833 based on the causal graph 800. The causal graphs 811 to 813, 821 to 823, and 831 to 833 correspond to leaves of a tree structure having the causal graph 800 as a root.

Next, a contradiction determination example of the causal graph candidate (fourth information) will be described with reference to Fig. 10. Here, the causal graphs 811 to 813, 821 to 823, and 831 to 833 depicted in Fig. 9 are taken as examples of multiple causal graph candidates, and a contradiction determination example of the causal graph candidates will be described.

Fig. 10 is an explanatory diagram depicting a contradiction determination example of a causal graph candidate. In Fig. 10, first, the identifying unit 704 excludes causal graph candidates that are not DAGs from the causal graphs 811 to 813,821 to 823, and 831 to 833. Here, the causal graph 812 is excluded because it is not a DAG.

Next, the identifying unit 704 excludes from the remaining causal graphs 811, 813, 821 to 823, and 831 to 833 after excluding the causal graph 812 that is not a DAG, a causal graph that contradicts the second information (presence or absence of UCP/UBP) obtained from each of the causal graphs 610 and 620 (see Fig. 6). The presence or absence of UCP/UBP is verified for all variables in the causal graphs 610 and 602 (data 501 and 502).

In the case of the causal graph 610, the second information (verification item A) capable of specifying that the UCP/UBP does not exist is obtained for the variable pair x₁ and x₂. In the case of the causal graph 620, the second information (verification item B) capable of specifying the presence of the UCP or the UBP is obtained for the pair of variables x₂ and x₃.

In this case, the identifying unit 704 verifies whether the remaining causal graphs 811, 813, 821 to 823, and 831 to 833 satisfy the following verification items A and B. For example, the identifying unit 704 may verify whether the verification items A and B are satisfied using an existing path finding algorithm such as breadth-first search.

Verification Item A: Neither a UCP nor a UBP exists between the variables x₁ and x₂ of the causal graph 610 (data 501). Verification Item B: A UCP or a UBP exists between the variables x₂ and x₃ of the causal graph 620 (data 502).

Here, taking the causal graph 813 as an example, for the verification item A, the variable x₃ is unobserved, but there is no UCP or UBP between the variables x₁ and x₃, and thus the identifying unit 704 determines that there is a match. For the verification item B, the variable x₁ has not been observed and there is a UCP "x₂→x₁→x₃", and thus the identifying unit 704 determines that the verification items are consistent. Therefore, the causal graph 813 is not inconsistent with any second information (presence or absence of UCP/UBP) and is not excluded.

Next, taking the causal graph 832 as an example, the identifying unit 704 determines that the verification item A is consistent because the variable x₃ is unobserved but there is no UCP or UBP between the variables x₁ and x₂. On the other hand, the identifying unit 704 determines that the verification item B is inconsistent because the variable x₁ is unobserved but there is no UCP or UBP between the variables x₂ and x₃. Therefore, the causal graph 832 is excluded.

Here, among the remaining causal graphs 811, 813, 821 to 823, and 831 to 833, the causal graphs 821 to 823, and 831 to 833 are excluded. As a result, the identifying unit 704 identifies the remaining causal graphs 811 and 813. The causal graphs 811 and 813 correspond to results obtained by integrating (cause-effect integration) the causal relationships estimated from the pieces of data 501 and 502.

Next, an example of pruning during a search will be described with reference to Fig. 11.

Fig. 11 is an explanatory diagram depicting an example of pruning. In Fig. 11, causal graphs 810, 820, and 830 generated from the causal graph 800 are depicted. Each of the causal graphs 810, 820, and 830 is in a state in which only the relationship between the variables x₁ and x₃ is set from the causal graph 800.

The generating unit 703 refers to the second information (presence or absence of UCP/UBP) obtained from each of the causal graphs 610 and 620 (see Fig. 6), and determines whether any relationship set between the variables x₂ and x₃ contradicts any of the second information for each of the causal graphs 810, 820, and 830.

Specifically, for example, the generating unit 703 verifies for each of the causal graphs 810, 820, and 830, whether the causal graph 810, 820, and 830 corresponds to the following conditions (i) and (ii). When any of the following conditions (i) and (ii) is satisfied, the causal graph 810, 820, and 830 is inconsistent with any one of the second information.
(i) Case where the UCP/UBP has already been created although the UCP/UBP does not originally exist. (ii) Case where the UCP/UBP cannot be created by the remaining side although the UCP/UBP originally exists.

More specifically, for example, the generating unit 703 may verify whether each of the causal graphs 810, 820, and 830 corresponds to the conditions (i) and (ii) using an existing path search algorithm such as breadth-first search without considering the relationship between the variables x₂ and x₃.

Here, the causal graph 810 does not correspond to any of the conditions (i) and (ii). In this case, the generating unit 703 generates causal graphs 811 to 813 lower than the causal graph 810 in a tree structure having the causal graph 800 as a root.

In the causal graphs 820 and 830, regarding the second information (with UCP/UBP for the variable pair x₂ and x₃) obtained from the causal graph 620, even when any relationship is set between the variables x₂ and x₃, neither UCP nor UBP may be created for the variable pair x₂ and x₃. That is, both of the causal graphs 820 and 830 correspond to the condition (ii). In this case, the generating unit 703 does not generate causal graphs (the causal graphs 821 to 823 and 831 to 833 depicted in Fig. 9) lower than the causal graphs 820 and 830 because the subsequent search is unnecessary.

As described above, the causal searching device 301 may reduce the processing load of the causal search by terminating (pruning) the search in the middle of the search for a portion inconsistent with any second information regardless of how the relationship is set from the current state (the causal graphs 820 and 830) in the future. For example, since the causality search device 301 does not need to perform the contradiction determination as described in Fig. 10 for the causality graphs 821 to 823 and 831 to 833, it is possible to reduce the processing load of the causality search.

Here, a specific example of the causal search result will be described with reference to Fig. 12.

Fig. 12 is an explanatory diagram depicting a specific example of a causal search result. In Fig. 12, the causal search result 1200 includes causal graphs 811 and 813. The causal graphs 811 and 813 correspond to causal graph candidates representing true causal relationships. However, the variable x₁ is replaced with the variable "smoking amount/day", the variable x₂ is replaced with the variable "alcohol consumption amount/day", and the variable x₃ is replaced with the variable "lung cancer risk".

According to the causal search result 1200, the user may grasp a causal relationship that cannot be estimated by the existing CAM-UV. For example, the user may grasp the causal relationship from the variable "smoking amount/day" to the variable "lung cancer risk" and the causal relationship from the variable "alcohol consumption amount/day" to the variable "lung cancer risk" with reference to the causal graph 811. In addition, the user may understand that there is no causal relationship from the variable "smoking amount/day" to the variable "lung cancer risk" or no causal relationship from the variable "alcohol consumption amount/day" to the variable "lung cancer risk" with reference to the causal graph 813.

The causal relationships depicted in the causal graphs 811 and 813 are candidates for true causal relationships. Which causal relationship depicted in the causal graphs 811 and 813 is a true causal relationship may be statistically determined, for example, including a causal graph obtained using other data.

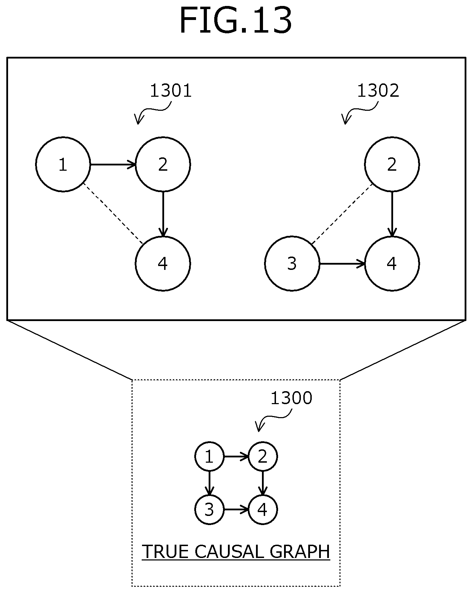

Here, an example of the present embodiment will be described. First, an output example of the CAM-UV will be described with reference to Fig. 13. The output of the CAM-UV corresponds to the first information.

Fig. 13 is an explanatory diagram depicting an output example of the CAM-UV. In Fig. 13, a causal graph 1301 is an output example when CAM-UV is applied to table data related to variables 1, 2, and 4 (variable 3 is unobserved). In the causal graph 1301, the relationship between the variables 1 and 4 is an "unidentifiable relationship".

A causal graph 1302 is an output example when CAM-UV is applied to table data related to variables 2, 3, and 4 (variable 1 is unobserved). In the causal graph 1302, the relationship between the variables 2 and 3 is an "unidentifiable relationship".

Here, it is assumed that the true causal graph is a "causal graph 1300". However, the true causal graph 1300 cannot be obtained only by applying each table data to CAM-UV.

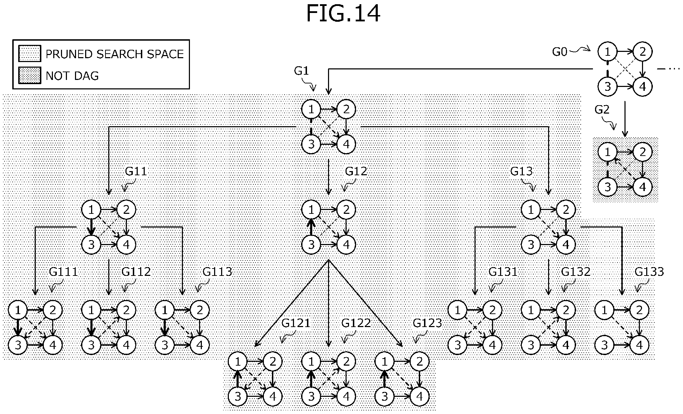

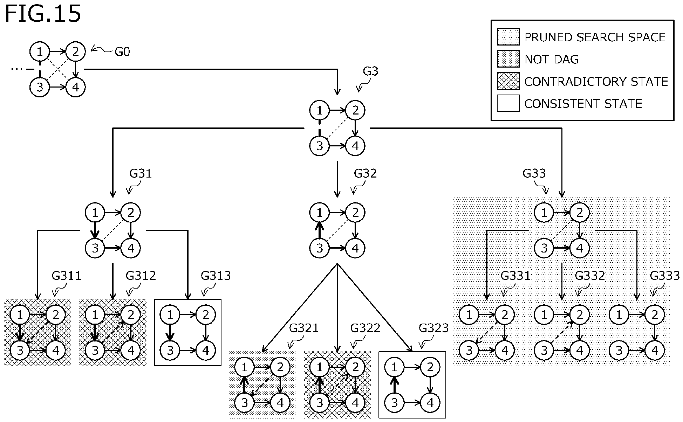

Next, a causal search example based on the causal graphs 1301 and 1302 depicted in Fig. 13 will be described with reference to Figs. 14 and 15.

Figs. 14 and 15 are explanatory diagrams depicting a causal search example. In Figs. 14 and 15, the causal graph G0 corresponds to third information obtained by integrating the causal graphs 1301 and 1302 (see Fig. 13). In the causal graph G0, the relationship between the variables 1 and 4 is an "unidentifiable relationship". The relationship between the variables 2 and 3 is an "unidentifiable relationship". The relationship between the variables 1 and 3 is an "unobserved relationship".

Here, it is assumed that the causal graphs G1, G2, and G3 are generated from the causal graph G0 by setting any one of the relationships between the variables 1 and 4 which are the "unidentifiable relationship".

In Fig. 14, as for the causal graph G1, UCP/UBP is created for variables 2 and 4. Therefore, the causal graph G1 contradicts the second information (without UCP/UBP for variables 2 and 4) of the causal graph 1302 (see Fig. 13) no matter how the relationship is set in the future. In this case, pruning occurs, and causal graphs (for example, causal graphs G11 to G13, G111 to G113, G121 to G123, and G131 to G133) lower than the causal graph G1 are not generated.

As for the causal graph G2, the causal graph G2 is excluded because the causal graph G2 is not a DAG at this time.

As for the causal graph G3 in Fig. 15, the DAG is formed at this time point, and the pruning does not occur, whereby the search is continued. Here, it is assumed that the causal graphs G31, G32, and G33 are generated from the causal graph G3 by setting any one of the relationships to the relationship between the variables 1 and 3 which is the "unobserved relationship".

Next, as for the causal graph G31, at this point in time, the graph is a DAG, and pruning does not occur, whereby the search is continued. Here, the causal graphs G311, G312, and G313 are generated from the causal graph G31 by setting any of the relationships between the variables 2 and 3 that are the "unidentifiable relationship".

Here, the causal graphs G311 and G312 contradict the second information (with UCP/UBP for variables 2 and 3) of the causal graph 1302 (see Fig. 13). Therefore, the causal graphs G311 and G312 are excluded. On the other hand, the causal graph G313 remains because the causal graph G313 matches a piece of the second information.

As for the causal graph G32, at this point in time, it is a DAG, and pruning does not occur, whereby the search is continued. Here, the causal graphs G321, G322, and G323 are generated from the causal graph G32 by setting any of the relationships between the variables 2 and 3 that are the "unidentifiable relationship".

Here, the causal graph G321 is not a DAG and thus, is excluded. The causal graph G322 contradicts the second information (with UCP/UBP for variables 2 and 3) of the causal graph 1302 (see Fig. 13). Therefore, the causal graph G322 is excluded. On the other hand, the causal graph G323 remains because the causal graph G323 matches a piece of the second information.

Next, as for the causal graph G33, UCP/UBP cannot be created for the variables 2 and 3. For this reason, the causal graph G33 contradicts the second information (with UCP/UBP for variables 2 and 3) of the causal graph 1302 (see Fig. 13) no matter how the relationship is set in the future. In this case, pruning occurs, and causal graphs (for example, causal graphs G331 to G333) lower than the causal graph G33 are not generated.

As a result, the causal graphs G313 and G323 are output as causal search results. The causal graph G313 matches the true causal graph 1300 (see Fig. 13), and it may be said that a highly accurate cause-effect search is performed.

Next, a procedure of a causal search process of the causal searching device 301 will be described.

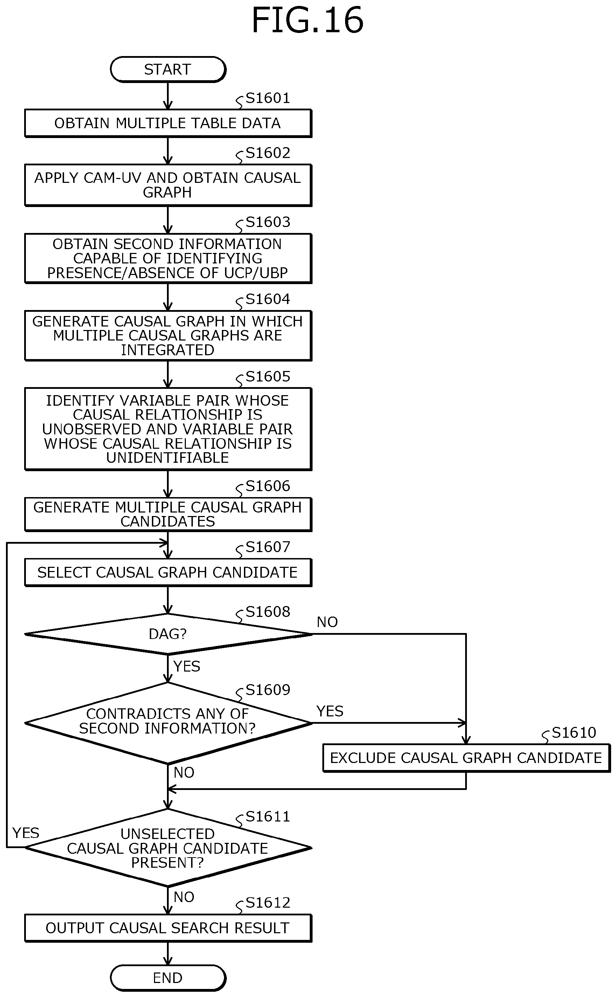

Fig. 16 is a flowchart depicting an example of a procedure of a causal search process of the causal searching device 301. In the flowchart depicted in Fig. 16, first, the causal searching device 301 obtains multiple table data (step S1601). The table data is incomplete data representing values of multiple variables associated with each other.

Then, the causal searching device 301 obtains a causal graph (first information) by estimating a causal relationship between variables by applying CAM-UV to each table data of the obtained multiple table data (step S1602). Next, the causal searching device 301 refers to each of the obtained causal graphs, and obtains second information capable of identifying the presence or absence of a UCP/UBP for each variable pair in the causal graph (step S1603).

Then, the causal searching device 301 generates a causal graph (third information) in which the obtained multiple causal graphs are integrated (step S1604). Next, the causal searching device 301 refers to the generated causal graph and identifies a variable pair whose causal relationship is unobserved and a variable pair whose causal relationship is unidentifiable (step S1605).

Then, the causal searching device 301 generates multiple causal graph candidates (fourth information) by setting, between the variables of each of the identified variable pairs in the generated causal graph, any relationship that may be taken as a relationship between the variables (step S1606). Next, the causal searching device 301 selects an unselected causal graph candidate that has not been selected from the multiple generated causal graph candidates (step S1607).

Then, the causal searching device 301 determines whether the selected causal graph candidate is a DAG (step S1608). Here, when the DAG is not formed (step S1608: NO), the causal searching device 301 proceeds to step S1610. On the other hand, when the selected causal graph candidate is a DAG (step S1608: YES), the causal searching device 301 determines whether the selected causal graph candidate contradicts any of the obtained second information (step S1609).

Here, when the selected causal graph candidate is inconsistent with any of the second information (step S1609: YES), the causal searching device 301 excludes the selected causal graph candidate (step S1610), and proceeds to step S1611. On the other hand, when there is no contradiction with any of the second information (step S1609: NO), the causal searching device 301 determines whether there is an unselected causal graph candidate that has not been selected from the multiple generated causal graph candidates (step S1611).

When there is an unselected causal graph candidate (step S1611: YES), the causal searching device 301 returns to step S1607. On the other hand, when there is no unselected causal graph candidate (step S1611: NO), the causal searching device 301 outputs a causal search result including the remaining causal graph candidate (step S1612), and ends the series of processes according to this flowchart.

Accordingly, the causal searching device 301 may estimate a relationship between unobserved variables or a relationship between variables that are difficult to identify by utilizing multiple pieces of incomplete data.

When the first relationship is set in the first variable pair of the specified variable pairs at step S1606, any relationship set in other variable pairs may not match the second information. In this case, the causal searching device 301 may exclude the causal graph candidate in which the first relationship is set in the first variable pair from the generation target (pruning).

As described above, for each piece of data representing values of multiple variables associated with each other, the causal searching device 301 according to the embodiment may obtain based on the data, first information concerning a causal relationship between variables estimated. Each data is, for example, table data in which each row is a record and each column is associated with each of multiple variables related to the record. Specifically, for example, the causal searching device 301 obtains the first information by applying CAM-UV to each piece of data. Further, according to the causal searching device 301, it is possible to specify a variable pair whose causal relationship is unobserved and a variable pair whose causal relationship is unidentifiable with reference to the third information obtained by integrating the multiple pieces of obtained first information. Then, according to the causal searching device 301, it is possible to generate multiple pieces of fourth information different from each other by setting, between the variables of each of the specified variable pairs in the generated third information, any relationship that may be taken as a relationship between the variables. Specifically, for example, the causal searching device 301 generates multiple pieces of fourth information by setting any one of "causal relationship from one variable to the other variable", "causal relationship from the other variable to the one variable", and "no causal relationship" between the variables of each of the specified variable pairs in the generated third information.

As a result, the causal searching device 301 may generate multiple causal graph candidates (fourth information) by integrating incomplete causal relationships derived from unobserved variables obtained from each data.

Further, according to the causal searching device 301, it is possible to obtain the second information capable of specifying whether there is a causal path passing through an unobserved variable for each variable pair of multiple variables with reference to each of the obtained first information. The causal pathway is, for example, UCP or UBP. Then, according to the causal searching device 301, it is possible to specify the fourth information that does not contradict any of the obtained second information among the multiple generated fourth information, and output the specified fourth information.

As a result, the causal searching device 301 may estimate a relationship between unobserved variables or a relationship between variables that are difficult to identify by excluding a causal graph candidate inconsistent with a result (second information) of CAM-UV, and may alleviate the difficulty of a causal search based on multiple pieces of incomplete data.

In addition, according to the causal searching device 301, it is possible to specify the fourth information that is consistent with any of the second information and is a DAG among the multiple pieces of fourth information.

As a result, the causal searching device 301 may improve the estimation accuracy of the causal relationship by excluding a causal graph candidate that is not a DAG (a causal reversal occurs).

Further, according to the causality search device 301, in generating the multiple pieces of fourth information, when the first relationship is set between the variables of the first variable pair among the specified variable pairs in the third information, even when any relationship is set between the variables of the variable pairs other than the first variable pair, it is possible to determine whether the relationship contradicts any of the obtained second information. Then, according to the causal searching device 301, when it is determined that there is a contradiction, the fourth information in which the first relationship is set to the first variable pair in the third information may be excluded from the generation target.

As a result, when generating multiple causal graph candidates (fourth information), the causal searching device 301 may abort (prune) the search in the middle of the search and reduce the processing load on the causal search when any relationship set to another variable pair does not match the result (second information) of the CAM-UV after the relationship of a certain variable pair is determined.

Thus, the causality search device 301 according to the embodiment may reduce the difficulty of causality search using multiple incomplete data. For example, the causal searching device 301 may integrate an incomplete causal relationship derived from an unobserved variable obtained from each piece of data and output a causal graph candidate (DAG) consistent with a result of CAM-UV.

Accordingly, the causal searching device 301 may estimate a relationship between unobserved variables or a relationship between variables that are difficult to identify, and may extend causal integration that may be assumed only for a linear causal model in the related art to CAM that is one of nonlinear causal models. For example, a medical record for each hospital may be said to be incomplete data in which unobserved variables are present in each hospital. In addition, experimental records of various experiments are also incomplete data in which unobserved variables are present in each experiment because settings are often different for each experiment. The causal searching device 301 may estimate an integrated causal relationship for incomplete data such as medical records for each hospital and various experimental records with different settings.

According to one aspect of the present embodiments, an effect is achieved in that the difficulty of a causal search based on multiple pieces of incomplete data may alleviated.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An information processing program for causing a computer to execute a process, the process comprising:
obtaining, for each of a plurality of data representing values of a plurality of variables associated with each other, first information related to a causal relationship between variables included in the plurality of variables estimated based on the each of the plurality of data;
referring to each of the obtained first information and obtaining second information capable of specifying whether a causal path passing through an unobserved variable exists for each variable pair among the plurality of variables;
specifying a variable pair whose causal relationship is unobserved and a variable pair whose causal relationship is unidentifiable by referring to third information obtained by integration of the obtained first information; and
specifying fourth information that does not contradict any of the obtained second information, the fourth information being specified from among a plurality of mutually different pieces of fourth information generated by setting, between the variables of each of the specified variable pairs in the third information, any relationship that may be taken as a relationship between the variables.

2. The information processing program according to claim 1, wherein the specifying the fourth information includes specifying the fourth information that is a directed acyclic graph.

3. The information processing program according to claim 1 or 2, the process further comprising generating the plurality of pieces of fourth information by setting for each pair of the specified variable pairs in the third information, any one of: a causal relationship from one variable to the other variable of the each pair, a causal relationship from the other variable to the one variable of the each pair, and no causal relationship between the variables of the each pair.

4. The information processing program according to claim 3, wherein in the generating the plurality of pieces of fourth information, when a first relationship is set between variables of a first variable pair of the specified variable pairs in the third information, the generating includes determining whether any relationship set between variables of another variable pair other than the first variable pair contradicts any of the obtained second information, and excluding from a generation target, the fourth information in which the first relationship is set to the first variable pair in the third information when determining that there is a contradiction.

5. The information processing program according to any one of claims 1 to 4, wherein
the obtaining the first information includes obtaining the first information by applying Causal Additive Models with Unobserved Variables (CAM-UV) to each of the plurality of data, and
the causal path is an unobserved causal path (UCP) or an unobserved background path (UBP).

6. The information processing program according to any one of claims 1 to 5, wherein the each of the plurality of data is table data in which each row is a record and columns correspond a plurality of variables related to the record.

7. The information processing program according to any one of claims 1 to 6, wherein the first information indicates any one of: a causal relationship, no causal relationship, or an unidentifiable causal relationship between variables of the plurality of variables.

8. The information processing program according to any one of claims 1 to 7, the process further comprising outputting the specified fourth information.

9. An information processing method executed by a computer, the method comprising:
obtaining, for each of a plurality of data representing values of a plurality of variables associated with each other, first information related to a causal relationship between variables included in the plurality of variables estimated based on the each of the plurality of data;
referring to each of the obtained first information and obtaining second information capable of specifying whether a causal path passing through an unobserved variable exists for each variable pair among the plurality of variables;
specifying a variable pair whose causal relationship is unobserved and a variable pair whose causal relationship is unidentifiable by referring to third information obtained by integration of the obtained first information; and
specifying fourth information that does not contradict any of the obtained second information, the fourth information being specified from among a plurality of mutually different pieces of fourth information generated by setting, between the variables of each of the specified variable pairs in the third information, any relationship that may be taken as a relationship between the variables.

10. An information processing device, comprising:
a memory; and
a processor coupled to the memory, the processor configured to:
obtain, for each of a plurality of data representing values of a plurality of variables associated with each other, first information related to a causal relationship between variables included in the plurality of variables estimated based on the each of the plurality of data;
refer to each of the obtained first information and obtain second information capable of specifying whether a causal path passing through an unobserved variable exists for each variable pair among the plurality of variables;
specify a variable pair whose causal relationship is unobserved and a variable pair whose causal relationship is unidentifiable by referring to third information obtained by integration of the obtained first information; and
specify fourth information that does not contradict any of the obtained second information, the fourth information being specified from among a plurality of mutually different pieces of fourth information generated by setting, between the variables of each of the specified variable pairs in the third information, any relationship that may be taken as a relationship between the variables.
